# EUROPEAN PATENT APPLICATION

(11) **EP 2 688 353 A1**
(43) Date of publication of application: **22.01.2014**
(21) Application number: 12757529.8
(22) Date of filing: 12.03.2012
(51) Int. Cl.: H04W 72/12, H04W 24/10, H04W 72/04, H04W 72/08

(54) **BASE STATION IN MOBILE COMMUNICATION SYSTEM AND SCHEDULING METHOD**

(30) Priority: 16.03.2011 JP 2011058267
(71) Applicant: NTT DOCOMO, INC., Chiyoda-ku Tokyo 100-6150 (JP)
(72) Inventor: UCHINO, Tooru, Tokyo 100-6150 (JP); IWAMURA, Mikio, Tokyo 100-6150 (JP); OFUJI, Yoshiaki, Tokyo 100-6150 (JP); ISHII, Hiroyuki, Tokyo 100-6150 (JP); UMESH, Anil, Tokyo 100-6150 (JP); OOKUBO, Naoto, Tokyo 100-6150 (JP); KIYOSHIMA, Kohei, Tokyo 100-6150 (JP)
(74) Representative: HOFFMANN EITLE
(86) International application number: PCT/JP2012/056301
(87) International publication number: WO 2012/124659

(57) **Abstract**

A base station of a communication system includes a quality information retrieval unit that retrieves quality information indicating a radio channel state of user equipment, a threshold value determination unit that determines, for each of the user equipment, a threshold value for at least one of a data retention amount and a data retention time period, depending on the quality information, a scheduler that calculates a scheduling coefficient for the user equipment for which at least the one of the data retention amount and the data retention time period exceeds the threshold value, and that allocates a radio resource to the user equipment at least in accordance with a magnitude of the scheduling coefficient, and a notification unit that reports to the user equipment that the radio resource is allocated.

## Description

### TECHNICAL FIELD

The present invention relates to a base station and a scheduling method of a mobile communication system.

### BACKGROUND ART

As a technique for improving frequency utilization efficiency of a mobile communication system, there is frequency scheduling. The frequency scheduling is classified roughly into a dynamic scheduling (Dynamic Scheduling) method and a semi-persistent scheduling (Semi-persistent Scheduling: SPS) method.

For a case of the dynamic scheduling method, radio resources are dynamically allocated to a user, depending on priority in accordance with types of data, and depending on as to whether a radio channel state is good or not. For example, it is determined, for each subframe (TTI) of 1 ms, which radio resources are allocated to which users. Since the manner of allocating the radio resources to the user is frequently changed, the radio resources can be flexibly utilized.

There are many types of data, which are exchanged by the user. There is a type of data such that an amount of the data is small but the latency is regulated to be short, such as a voice packet (VoIP), for example. There is a type of data such that an amount of the data is large but the latency is not regulated to be so short, such as that of data communication, for example. For a case of the voice packet, data is periodically generated, where the amount of the data is small. When the scheduling is performed for such a voice packet in accordance with the above-described dynamic scheduling method, it may be required to specify radio resources on an individual basis for each of the periodically generated voice packets, where the amount of the data is small. In this case, a percentage of signaling overhead, which is required for reporting the radio resources, relative to the whole data to be communicated becomes large, and it is possible that utilization efficiency of the radio resources is lowered.

The semi-persistent scheduling method (SPS) is a method which addresses such a problem. For the case of the semi-persistent scheduling method, the allocation of the radio resources for one time is applied not only to one subframe, but also to many subsequent subframes. Namely, by periodically allocating a constant radio resource, the overhead which is required for the signaling of radio resources is reduced. Thus, if all units of user equipment in the mobile communication system conform to the semi-persistent scheduling method (SPS), the above-described problem can be resolved by using the SPS for voice packets.

However, a situation can be considered where not all the units of the user equipment in the mobile communication system conform to the semi-persistent scheduling method (SPS). In this case, the allocation of the radio resources is in accordance with the dynamic scheduling method. In that case, it may be required to specify the radio resources on an individual basis for each of the periodically generated voice packets, where the amount of the data is small. The problem of concern is the above-described problem that the overhead becomes large.

Furthermore, another problem of concern is that, due to the enlargement of the overhead, the number of the users, who are allowed to utilize a voice service, is regulated to be a small number. Suppose that the scheduling is performed for each subframe of 1 ms, and that the number of the users to whom the radio resources can be allocated in one subframe is N. Since voice packets are periodically generated, if the period is T, the number of the users who are allowed to utilize the voice service at the same time (namely, voice capacity) is N × T. For example, if N = 3 and T = 20 ms, the voice capacity is 3 × 20 = 60 people. As one of the techniques for increasing this voice capacity, there is a delay packing method. For the case of the delay packing method, the voice packets are transmitted at periods which are greater than a generating period, based on a fact that the voice packets which are heard by a human are not affected in quality, even if the voice packets are transmitted at periods which are greater than the generating period of 20 ms. For example, even if voice packets of a user are generated at every T = 20 ms, the voce packets are transmitted to the user at every 3T = 60 ms. By doing this, the voice capacity can be tripled. Non-Patent Document 1 discloses the delay packing.

### RELATED ART DOCUMENT

### [NON-PATENT DOCUMENT]

Non-Patent Document 1: Oscar Fresan, et al., "Dynamic Packet Bundling for VoIP Transmission Over Rel'7 HSUPA with 10 ms TTI Length," IEEE ISWCS 2007, pp.5008-512

### SUMMARY OF THE INVENTION

### PROBLEM TO BE SOLVED BY THE INVENTION

The delay packing method increases the voice capacity by causing the periods for transmitting the voice packets to be greater than the generating period of the voice packets. In this case, while the voice capacity is increased, the amount of the voice packets which are transmitted at the same time is also increased. For example, for a case where a voice packet which is generated at every 20 ms is transmitted at every 20 ms, the number of the voice packets transmitted at the same time is one. Whereas, for a case where the voice packet which is generated at every 20 ms is transmitted at every 60 ms, the number of the voice packets transmitted at the same time is three. Namely, as the period for transmitting the voice packets becomes greater, the number of the voice packets which are transmitted at the same time (amount of data) becomes greater. It is advantageous for a user whose radio channel state is good that the amount of data to be transmitted/received at the same time is large. However, it is disadvantageous for a user whose radio channel state is not good. For example, as a result that many voice packets are transmitted at the same time to the user whose radio channel state is not good, a large number of retransmissions may be required, and throughput may be lowered, instead. In this manner, the delay packing method according to a related art does not consider communication states of individual users.

An object of the present invention is to increase voice capacity while considering communication states of individual users.

### MEANS FOR SOLVING THE PROBLEM

A base station according to one embodiment is a base station of a communication system including a quality information retrieval unit that retrieves quality information indicating a radio channel state of user equipment; a threshold value determination unit that determines, for each of the user equipment, a threshold value for at least one of a data retention amount and a data retention time period, depending on the quality information; a scheduler that calculates a scheduling coefficient for the user equipment for which at least the one of the data retention amount and the data retention time period exceeds the threshold value, and that allocates a radio resource to the user equipment at least in accordance with a magnitude of the scheduling coefficient; and a notification unit that reports to the user equipment that the radio resource is allocated.

### EFFECT OF THE PRESENT INVENTION

According to one embodiment, the voice capacity can be increased while considering the communication states of the individual units of the user equipment.

### BRIEF DESCRIPTION OF THE DRAWINGS

FIG. 1 is a functional block diagram of an eNodeB which is used in an embodiment;
FIG. 2 is a diagram showing a table of a correspondence among quality information, a threshold value of a data retention amount, and a threshold value of a data retention time period;
FIG. 3 is a flowchart of a scheduling method which is utilized in the embodiment;
FIG. 4 is a diagram illustrating an outline of operations from a perspective of the data retention amount; and
FIG. 5 is a diagram illustrating an outline of operations from a perspective of the data retention time period.

### EMBODIMENTS FOR CARRYING OUT THE INVENTION

An eNodeB according to one embodiment determines, for each of users, a threshold value of a data retention amount and/or a threshold value of a data retention time period in accordance with quality information which indicates a radio channel state. The user for whom the data retention amount and/or the data retention time period exceed/exceeds the threshold values/the threshold value becomes a candidate to whom radio resources are to be allocated, and a scheduling coefficient is calculated for the user. The radio resources are preferentially allocated to the user whose scheduling coefficient is relatively large (or who is determined to have a high priority in a deterministic manner). The threshold value of the data retention amount and/or the threshold value of the data retention time period are/is determined for each of the users. For example, for a case of a user for whom the radio channel state is good, large values/a large value are/is set, and for a case of a user for whom the radio channel state is not good, small values/a small value are/is set. For the case of the user for whom the radio channel state is good (for example, the user at a center of a cell), since the threshold value of the data retention amount and/or the threshold value of the data retention time period are/is large, the user for whom a considerable amount of data is retained becomes a candidate to whom the radio resources are to be allocated. With this, an increase in voice capacity can be attempted. For the case of the user for whom the radio channel state is not good, since the threshold value of the data retention amount and/or the threshold value of the data retention time period are/is small, the user for whom a certain amount of data is retained becomes the candidate to whom the radio resources are to be allocated. For example, a large amount of data may not be transmitted at the same time to a user located at an edge of a cell. Accordingly, the problem of the related art that the retransmissions are increased for the user at the edge of the cell can be effectively resolved.

### [Embodiment 1]

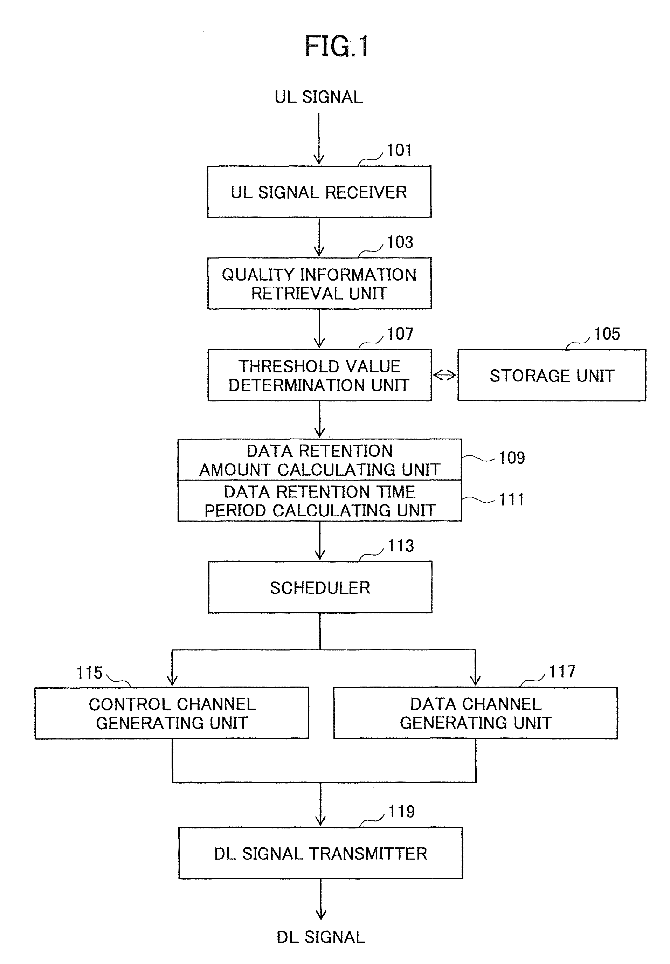

FIG. 1 shows a functional block diagram of an eNodeB (a base station) which is used for the embodiment. FIG. 1 shows, among processing units for achieving various functions included in the eNodeB of a mobile communication system, the processing units which are particularly related to the embodiment. For convenience of explanation, it is assumed that the eNodeB shown in the figure is an eNodeB in a mobile communication system according to the long term evolution (LTE) scheme, for example. However, it may be a base station of another mobile communication system. In FIG. 1, a UL signal receiver 101; a quality information retrieval unit 103; a storage unit 105; a threshold value determination unit 107; a data retention amount calculating unit 109; a data retention time period calculating unit 111; a scheduler 113; a control channel generating unit 115; a data channel generating unit 117; and a DL signal transmitter 119 are shown.

The UL signal receiver 101 receives an uplink signal (UL signal) from user equipment, and converts it into a baseband signal. Thus, the UL signal receiver 101 includes a function for filtering a received radio signal; a function for converting an analog signal into a digital signal; a function for performing data demodulation of the received signal; and a function for performing channel decoding of the received signal, for example. In general, an uplink signal includes a control channel, a pilot channel, and a data channel, for example.

The quality information retrieval unit 103 retrieves quality information indicating whether a radio channel state is good from the uplink signal (UL signal). The quality information is included in the control channel. The quality information may be information indicating a radio channel state of a downlink, the quality information may be information indicating a radio channel state of an uplink, or the quality information may be information including both of them. For example, the radio channel state of the downlink may be represented by a channel state indicator (CQI), which is derived from a reception level of a pilot signal received by the user equipment. The radio channel state of the uplink may be derived from a reception level of a pilot signal received by the eNodeB. The reception levels of the pilot signals received by the eNodeB and the user equipment may be represented by any suitable quantity, which is known to a person skilled in the art. For example, the reception level may be broadly defined to be a quantity representing whether the radio channel state is good or not, regardless of whether it is an instantaneous value or an average value. For example, the reception level may be represented by received power, an electric field strength RSSI, desired wave received power RSCP, a pathloss, a SNR, a SIR, or E_{c}/N₀.

The storage unit 105 stores a correspondence among the quality information, the threshold value of the data retention amount, and the threshold value of the data retention time period.

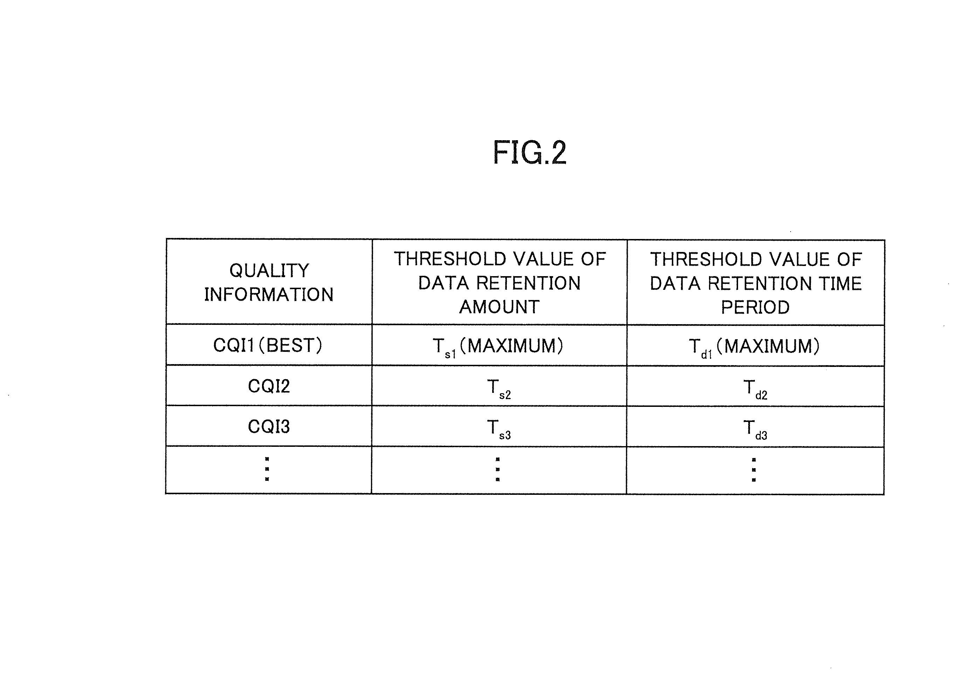

FIG. 2 shows such a correspondence which is expressed as a table. As an example, the quality information is represented by the CQI. However, as described above, the quality information may be represented by another quantity. For convenience of the explanation, it is assumed that the CQI is degraded in the order of CQI1, CQI2, CQI3, etc. The threshold value of the data retention amount takes a greater value as the corresponding quality information is better, and takes a smaller value as the corresponding quality information is worse. Thus, the threshold values of the data retention amount are Tₛ₁ > Tₛ₂ > Tₛ₃, etc., in a descending order. The threshold value of the data retention time period also takes a greater value as the corresponding quality information is better, and takes a smaller value as the corresponding quality information is worse. Thus, the threshold values of the data retention time period are T_{d1} > T_{d2} > T_{d3}, etc., in a descending order. For convenience of the explanation, one threshold value Tₛₓ of the data retention amount and one threshold value T_{dx} of the data retention time period are corresponding to one quality information piece CQIx. However, such a one-to-one correspondence is not mandatory. One or more number of threshold values Tₛₓ of the data retention amount and one or more number of threshold values T_{dx} of the data retention time period may correspond to one or more quality information pieces CQIx.

The threshold value determination unit 107 determines, for each of the users, the threshold value of the data retention amount and the threshold value of the data retention time period, based on the quality information of the user. For example, suppose that the quality information of a user is CQI2. In this case, the threshold value determination unit 107 determines, by referring to the table stored in the storage unit 105, the threshold values Tₛ₂ and T_{d2}, which correspond to the CQI2, as the threshold values for the user. For convenience of the explanation, both the threshold value of the data retention amount and the threshold value of the data retention time period are determined. More generally, the threshold value determination unit 107 determines, for each of the users, one of the threshold values of the data retention amount and the data retention time period.

The quality information is repeatedly obtained from the user equipment. However, for example, from a perspective of stability of operations, it is not preferable to change the threshold value each time different quality information is obtained from the user equipment. Accordingly, it can be considered to average some of the quality information pieces which are obtained from the user equipment, and to change the threshold value to be a threshold value corresponding to the average quality information. The averaging may be arithmetic averaging, or averaging using a forgetting factor, for example. Alternatively, it can be considered to change the threshold value to be a threshold value corresponding to quality information, only if quality information pieces which are obtained more than one time indicate the same value.

The data retention amount calculating unit 109 calculates, for each of the users, a retention amount of data to be transmitted to the user in the downlink. Additionally, the data retention amount calculating unit 109 calculates, for each of the users, a retention amount of data to be received from the user in the uplink. The retention amount of the data means an amount of data which is waiting to be transmitted and retained in a buffer.

The data retention time period calculating unit 111 calculates, for each of the users, a retention time period of data to be transmitted to the user in the downlink. Additionally, the data retention time period calculating unit 111 calculates, for each of the users, a retention time period of data to be received from the user in the uplink. The retention time period of the data means a time period for the data which is waiting to be transmitted is retained in a buffer.

The scheduler 113 calculates a scheduling coefficient for a user when the retention amount of the data or the retention time period of the data for the user exceeds the threshold value for the user. It should be noted that the threshold value is determined for each of the users, unlike the conventional case. The scheduler 113 preferentially allocates radio resources to a user having a relatively large value of the scheduling coefficient (or who is determined to have a high priority in a deterministic manner). The scheduling coefficient may be calculated by any suitable method. As an example, the scheduling coefficient may be calculated by a Max C/I method or a proportional fairness method. For the case of the embodiment, when the user's data retention amount or data retention time period exceeds the user's threshold value, the user becomes a candidate to whom the radio resources are to be allocated, and the scheduling coefficient is calculated. The user whose data retention amount or data retention time period does not exceed the threshold value does not become a candidate to whom the radio resources are to be allocated.

The control channel generating unit 115 generates a control channel that indicates how the radio resources are allocated to the user. For the case of the mobile communication system according to the LTE scheme, this control channel corresponds to a physical downlink control channel (PDCCH). The control channel includes information such as an identifier of the user to whom the radio resources are allocated, information regarding resource blocks which are allocated in the downlink and/or the uplink, and information regarding a data format (a data modulation scheme and a channel coding rate).

The data channel generating unit 117 generates a data channel for transmitting user data in the downlink. In general, the user data is a voice packet (VoIP), real-time data, and data for data communication, for example. For the mobile communication system according to the LTE scheme, the data channel corresponds to a physical downlink shared channel (PDSCH).

The DL signal transmitter 119 transmits a downlink signal (DL signal) to the user equipment. Thus, the DL signal transmitter 119 includes a function for performing channel coding, a function for applying data modulation to data to be transmitted, a function for converting a digital signal into an analog signal, a function for filtering a signal to be transmitted, and a function for amplifying the signal to be transmitted, for example.

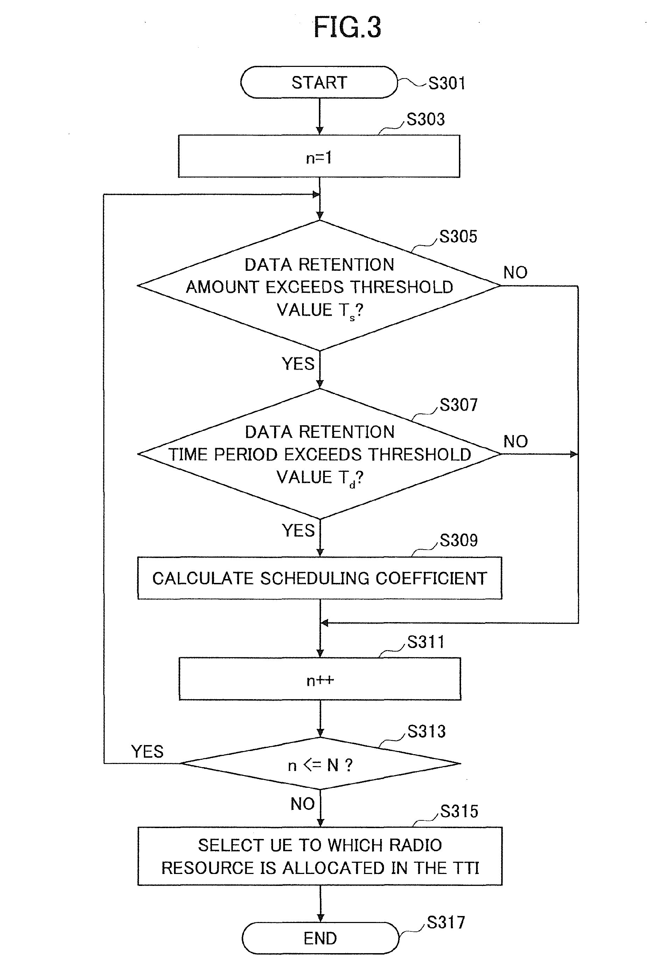

FIG. 3 shows a flowchart of a scheduling method which is used in the embodiment. The scheduling method can be used by an eNodeB such as shown in FIG. 1. It is assumed that the eNodeB has already retrieved the quality information of the radio channel state from the user, who is served in the cell, prior to the start of the flow. The flow starts at step S301, and the flow proceeds to step S303.

At step S303, a parameter n of a user index is set to be one, which is the initial value. The parameter n takes a value which is greater than or equal to one and less than or equal to N. Here, N represents the total number of the users for whom bearers have already been established in the mobile communication system.

At step S305, the eNodeB calculates a data retention amount of the user corresponding to the parameter n, and the eNodeB determines whether the data retention amount exceeds the threshold value of the user. When it is exceeded, the flow proceeds to step S307.

At step S307, the eNodeB calculates a data retention time period of the user corresponding to the parameter n, and the eNodeB determines whether the data retention time period exceeds the threshold value of the user. When it is exceeded, the flow proceeds to step S309.

At step S309, the eNodeB calculates a scheduling coefficient of the user corresponding to the parameter n. The scheduling coefficient may be calculated by any suitable method. As an example, the scheduling coefficient may be calculated by the Max C/I method or the proportional fairness method.

At step S311, the value of the parameter n is incremented. For a case where the data retention amount does not exceed the threshold value at step S305, the flow also reaches step S311, and the value of the parameter n is incremented. Further, for a case where the data retention time period does not exceed the threshold value at step S307, the flow also reaches step S311, and the value of the parameter n is incremented. Accordingly, for the user for whom the data retention amount does not exceed the threshold value and for the user for whom the data retention time period does not exceed the threshold value, the calculation of the scheduling coefficient at step S309 is not performed. These users are excluded from candidates to whom the radio resources are to be allocated.

At step S313, a determination is made as to whether the value of the parameter n of the user index is less than or equal to the total number N of the users, for whom the bearers have already been established. When the value of the parameter n is less than or equal to the total number N of the users, for whom the bearers have already been established, the flow returns to step S305, and the already explained processes are performed. When the value of the parameter n is greater than the total number N of the users, for whom the bearers have already been established, the flow proceeds to step S315.

At step S315, the eNodeB selects a user whose value of the scheduling coefficient is relatively large (or who is determined to have a high priority in a deterministic manner), and the eNodeB preferentially allocates the radio resources to the user. The eNodeB reports to the user that the radio resources are allocated.

Subsequently, the flow proceeds to step S317, and the flow of the scheduling method is terminated. With this, the allocation of the radio resources is terminated for the subframe (TTI) which is the subject of the scheduling. The scheduling for the next subframe starts from step S401.

In the flow shown in the figure, step S307 is executed subsequent to step S305. However, it is not mandatory. It may be executed in a reverse order, or steps S305 and S307 may be simultaneously performed. Further, it is not mandatory to perform both steps S305 and S307. One of them may be omitted.

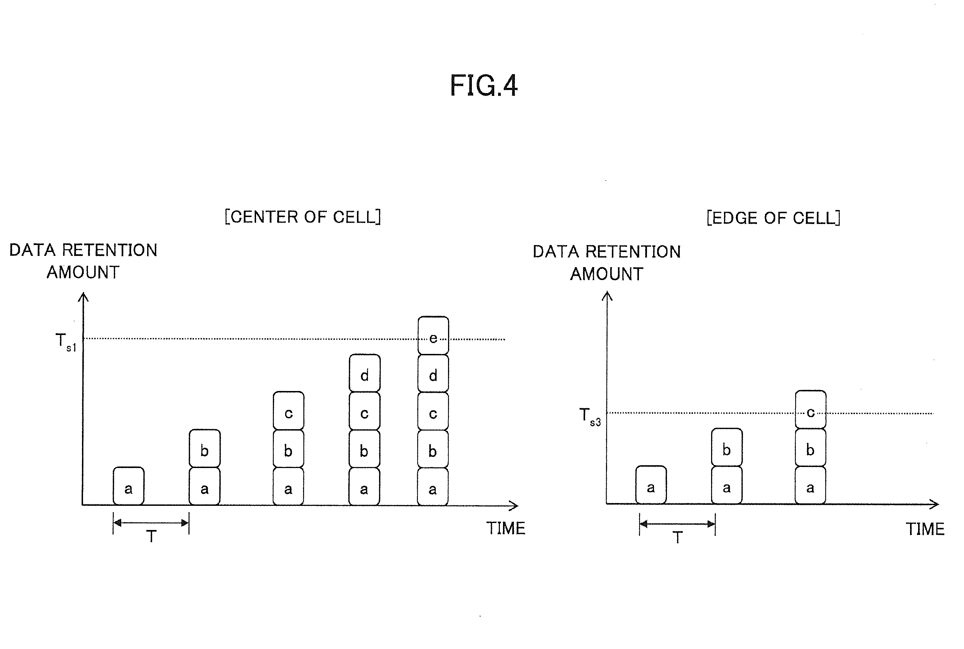

FIG. 4 is a diagram illustrating an outline of operations from a perspective of the data retention amount. Suppose that a voice packet is generated, for example, at every period T of 20 ms for a case where a user communicates the voice packets (VoIP). Suppose that first a voice packet "a" is generated, a voice packet "b" is generated at the next period, and subsequently voice packets "c," "d," and "e" are periodically generated in a similar manner, as shown in the left side of FIG. 4. The threshold value of the data retention amount for this user is Tₛ₁. As explained while referring to FIG. 2, Tₛ₁ is the maximum value. This corresponds to that the quality information is the best value. Namely, the radio channel state of this user is good, and this user is located at a center of the cell, for example. This user becomes a candidate to whom the radio resources are to be allocated when the data retention amount exceeds the threshold value Tₛ₁. For the case of the depicted example, since the data retention amount does not reach the threshold value Tₛ₁ at a time period where the voice packets a - d are generated, this user is not subject to the allocation of the radio resources up to that time period. However, the data retention amount exceeds the threshold value Tₛ₁ by the generation of the voice packet e, and at this stage, this user becomes the subject to which the radio resources are to be allocated. To explain by the flowchart of FIG. 3, for this user, the flow proceeds from step S305 to step S311 up to the time period where the voice packets a - d are generated, and the flow proceeds from step S305 toward S309 only after the voice packet e is generated (for simplicity of the explanation, it is assumed that step S307 is omitted). With this, the scheduling coefficient for this user is calculated, and this user becomes the candidate to whom the radio resources are to be allocated.

The right side of FIG. 4 shows a case of a user whose radio channel state is not good. As explained while referring to FIG. 2, Tₛ₃ is less than the maximum value Tₛ₁ (Tₛ₁ > Tₛ₂ > Tₛ₃). This user is located at an edge of the cell, for example. This user becomes the candidate to whom the radio resources are to be allocated when the data retention amount exceeds the threshold value Tₛ₃. For the depicted example, since the data retention amount does not reach the threshold value Tₛ₃ at a time period where the voice packets a and b are generated, this user is not subject to the allocation of the radio resources up to that time period. However, the data retention amount exceeds the threshold value Tₛ₃ by the generation of the voice packet c, and at this stage, the user becomes the subject to which the radio resources are allocated. To explain by the flowchart of FIG. 3, for this user, the flow proceeds from step S305 to step S311 up to the time period where the voice packets a and b are generated, and the flow proceeds from step S305 toward S309 when the voice packet c is generated (for simplicity of the explanation, it is assumed that step S307 is omitted). With this, the scheduling coefficient of this user is calculated, and this user becomes the candidate to whom the radio resources are to be allocated.

In this manner, for the case of the user at the edge of the cell, the threshold value of the data retention amount is set to be a smaller value compared to the case of the user at the center of the cell (Tₛ₁ > Tₛ₃). Consequently the conventional problem is effectively resolved such that many voice packets are transmitted at the same time to the user at the edge of the cell, thereby causing many retransmissions. For the case of the user at the center of the cell, since the radio channel state is good, an improvement in the voice capacity can be attempted by setting a greater threshold value of the data retention amount. For the conventional case, when the data retention amount exceeds the threshold value Tₛ₁, the five voice packets a - e are transmitted to the user in the same way, regardless of whether the user is at the center of the cell or at the edge of the cell. Whereas, for the case of the embodiment, it can be arranged such that the five voice packets a - e are transmitted to the user at the center of the cell, while only the three packets a - c are transmitted to the user at the edge of the cell.

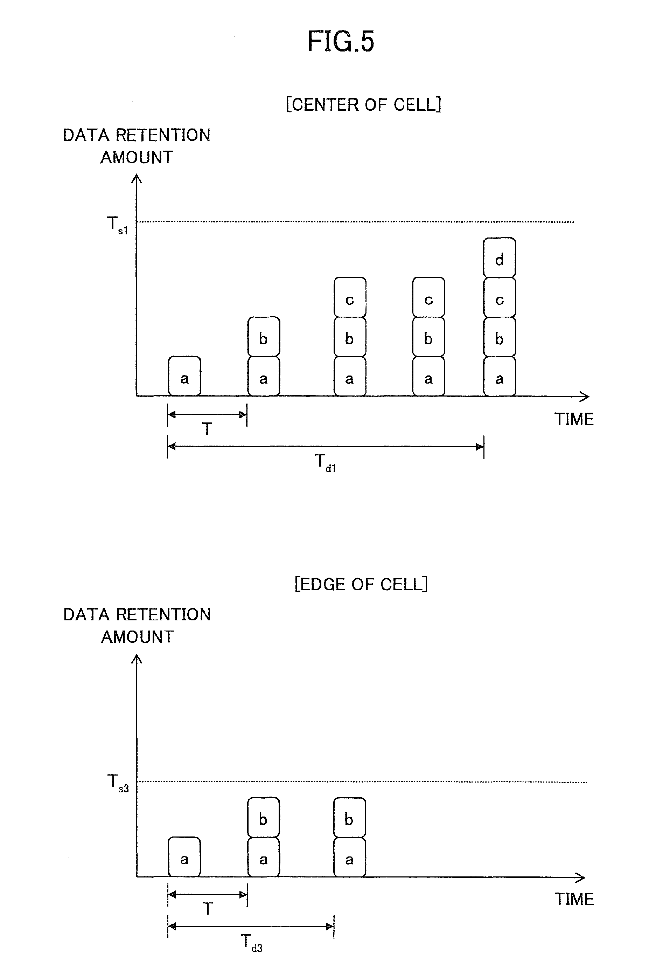

FIG. 5 is a diagram illustrating an outline of operations from a perspective of the data retention time period. Similar to the case of FIG. 4, it is assumed that the voice packet is generated, for example, at every period T of 20 ms, for the case where the user transmits the voice packets (VoIP). As shown in the upper side of FIG. 5, supposed that first the voice packet "a" is generated, the voice packet "b" is generated at the next period, and subsequently the voice packets "c" and "d" are periodically generated in a similar manner. The threshold value of the data retention amount for this user is Tₛ₁. The radio channel state of this user is good, and this user is located at the center of the cell, for example. For the case of the example which is explained by FIG. 4, this user becomes the candidate to whom the radio resources are to be allocated when the data retention amount exceeds the threshold value Tₛ₁. However, depending on a case, it is possible that the data retention amount is less than the threshold value Tₛ₁ for a long time. In this case, this user may not become the candidate for a long time to whom the radio resources are to be allocated. From such a perspective, in the embodiment, not only the threshold value of the data retention amount, but also the threshold value of the data retention time period are utilized.

For the case of the depicted example, the voice packet a - d are generated, but the data retention amount does not reach the threshold value Tₛ₁. However, when the data retention time period exceeds the threshold value T_{d1}, this user becomes the candidate to whom the radio resources are to be allocated. To explain by the flowchart of FIG.3, for this user, the flow proceeds from step S307 to step S311 during the time period where the data retention time period does not reach T_{d1}, and the flow proceeds from step S307 to step S309 when the data retention time period reaches T_{d2}. With this, the scheduling coefficient for this user is calculated, and this user becomes the candidate to whom the radio resources are to be allocated.

The bottom side of FIG. 5 shows a case of a user whose radio channel state is not good. As explained by referring to FIG. 2, Tₛ₃ is less than the maximum value Tₛ₁ (Tₛ₁ > Tₛ₂ > Tₛ₃). This user is located at an edge of the cell, for example. For the case of the example which is explained by FIG. 4, this user becomes the candidate to whom the radio resources are to be allocated when the data retention amount exceeds the threshold value Tₛ₃. Even if the threshold value of the data retention amount is a small value, it is possible that the data retention amount stays less than the threshold value.

For the case of the depicted example, though the voice packets a and b are generated, the data retention amount does not reach the threshold value Tₛ₃. However, when the data retention time period exceeds T_{d3}, this user becomes the subject of the allocation of the radio resources. As described above, T_{d1} > T_{d2} > T_{d3}. To explain by the flowchart of FIG. 3, for this user, the flow proceeds from step S307 to step S311 during the time period where the data retention time period does not reach T_{d3}. and the flow proceeds from step S307 to step S309 when the data retention time period reaches T_{d3}. With this, the scheduling coefficient for this user is calculated, and the user becomes the candidate to whom the radio resources are to be allocated.

Similar to the case of the data retention amount, for the case of the user at the edge of the cell, the threshold value of the data retention time period is set to be a smaller value compared to the case of the user at the center of the cell (T_{d1} > T_{d3}). Accordingly, the conventional problem is effectively resolved such that many voice packets are transmitted at the same time to the user at the edge of the cell, thereby causing many retransmissions. For the case of the user at the center of the cell, since the radio channel state is good, an improvement in the voice capacity can be attempted by setting a greater threshold value of the data retention amount.

Hereinabove, the present invention is explained by referring to the specific embodiments. However, the embodiments are merely illustrative, and variations, modifications, alterations and substitutions could be conceived by those skilled in the art. For example, the present invention may be applied to any suitable mobile communication system that performs scheduling. For example, the present invention may be applied to a W-CDMA system, a HSDPA/HSUPA based W-CDMA system, an LTE system, an LTE-Advanced system, an IMT-Advanced system, a WiMAX system, a Wi-Fi system, and the like. Specific examples of numerical values are used in order to facilitate understanding of the invention. However, these numerical values are simply illustrative, and any other appropriate values may be used, except as indicated otherwise. For the convenience of explanation, the devices according to the embodiments of the present invention are explained by using functional block diagrams. However, these devices may be implemented in hardware, software, or combinations thereof. The software may be prepared in any appropriate storage medium, such as a random access memory (RAM), a flash memory, a read-only memory (ROM), an EPROM, an EEPROM, a register, a hard disk drive (HDD), a removable disk, a CD-ROM, a database, a server, and the like. The present invention is not limited to the above-described embodiments, and various variations, modifications, alterations, substitutions and so on are included, without departing from the spirit of the present invention.

The present international application claims priority based on Japanese Patent Application No. 2011-058267, filed on March 16, 2011, the entire contents of Japanese Patent Application No. 2011-058267 are hereby incorporated by reference.

### LIST OF REFERENCE SYMBOLS

- 101:: UL signal receiver
- 103:: Quality information retrieval unit
- 105:: Storage unit
- 107:: Threshold value determination unit
- 109:: Data retention amount calculating unit
- 111:: Data retention time period calculating unit
- 113:: Scheduler
- 115:: Control channel generating unit
- 117:: Data channel generating unit
- 119:: DL signal transmitter

## Claims

1. A base station of a communication system, the base station comprising:
a quality information retrieval unit that retrieves quality information indicating a radio channel state of user equipment;
a threshold value determination unit that determines, for each of the user equipment, a threshold value for at least one of a data retention amount and a data retention time period, depending on the quality information;
a scheduler that calculates a scheduling coefficient for the user equipment for which at least the one of the data retention amount and the data retention time period exceeds the threshold value, and that allocates a radio resource to the user equipment at least in accordance with a magnitude of the scheduling coefficient; and
a notification unit that reports to the user equipment that the radio resource is allocated.

2. The base station according to claim 1,
wherein the threshold value determination unit determines the threshold value according to an average value of the quality information.

3. The base station according to claim 1,
wherein the threshold value determination unit determines the threshold value according to the quality information, wherein a same value is obtained more than once for the quality information.

4. The base station according to claim 1, further comprising:
a storage unit that stores a correspondence among the quality information, the threshold value of the data retention amount, and the threshold value of the data retention time period.

5. The base station according to claim 1,
wherein the quality information to be retrieved by the quality information retrieval unit is represented by a channel quality indicator that indicates a downlink radio channel state.

6. The base station according to claim 1,
wherein the quality information to be retrieved by the quality information retrieval unit indicates whether an uplink radio channel state is good.

7. A scheduling method of a communication system, the method comprising steps of:
retrieving quality information indicating a radio channel state of user equipment;
determining, for each of the user equipment, a threshold value for at least one of a data retention amount and a data retention time period, depending on the quality information;
calculating a scheduling coefficient for the user equipment for which at least the one of the data retention amount and the data retention time period exceeds the threshold value;
allocating a radio resource to the user equipment at least in accordance with a magnitude of the scheduling coefficient; and
reporting to the user equipment that the radio resource is allocated.
